# FASCICULE DE BREVET EUROPEEN

(11) **EP 3 483 070 B1**
(45) Date de publication et mention de la délivrance du brevet: **01.03.2023**
(21) Numéro de dépôt: 18204827.2
(22) Date de dépôt: 07.11.2018
(51) Int. Cl.: B64D 45/02, H01T 19/02

(54) **DISPOSITIF ANTI-FOUDRE POUR AÉRONEF, AÉRONEF COMPORTANT UN TEL DISPOSITIF ANTI-FOUDRE**
BLITZABLEITERVORRICHTUNG FÜR LUFTFAHRZEUG, LUFTFAHRZEUG, DAS EINE SOLCHE BLITZABLEITERVORRICHTUNG UMFASST
LIGHTNING ARRESTOR DEVICE FOR AIRCRAFT, AIRCRAFT COMPRISING SUCH A LIGHTNING ARRESTOR DEVICE

(30) Priorité: 09.11.2017 FR 1760532
(43) Date de publication de la demande: 15.05.2019
(73) Titulaire: Airbus (S.A.S.), 31700 Blagnac (FR)
(72) Inventeur: PERES, Gilles, 31000 Toulouse (FR); REVEL, Ivan, 31520 Ramonville (FR)
(74) Mandataire: Jardel, Marc Henry Philippe

(56) Documents cités:
- FR-A1- 2 163 372
- US-A- 2 515 182
- US-A- 3 617 805
- US-A- 3 628 090

## Description

### DOMAINE TECHNIQUE

La présente invention appartient au domaine des systèmes de protection contre la foudre adaptés au domaine de l'aéronautique. Notamment, l'invention concerne un dispositif visant à réduire le risque de foudroiement pour un aéronef de petite taille.

### ÉTAT DE LA TECHNIQUE

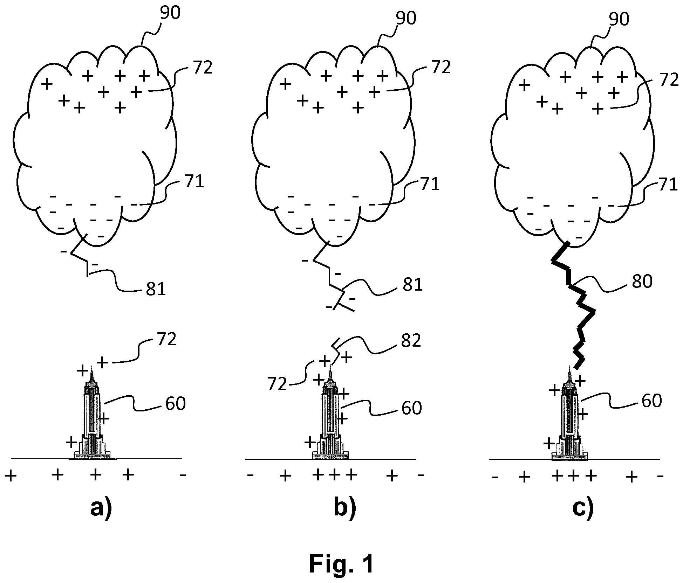

La décharge électrique associée à la foudre intervient généralement entre un nuage et le sol, entre deux nuages, ou à l'intérieur d'un même nuage. La figure 1 représente schématiquement la formation d'une décharge de foudre entre un nuage 90 et le sol. Dans le nuage 90, des charges électriques positives 72 se développent et s'accumulent généralement en haut du nuage, tandis que des charges électriques négatives 71 sont réparties en bas du nuage 90. Le développement et la répartition des charges électriques 71, 72 dans le nuage 90 ont pour effet d'augmenter considérablement le champ électrique entre la base du nuage 90 et le sol. Une zone chargée électriquement avec une polarité opposée à celle des charges électriques 71 présentes à la base du nuage 90 se forme alors à la surface de la terre sous le nuage 90, et plus particulièrement au niveau des objets élevés et pointus (arbres, poteaux, bâtiments, etc.). C'est notamment le cas pour le bâtiment 60 représenté sur la figure 1. La création d'un canal ionisé dans l'air constitue la première phase du développement de la décharge électrique liée à la foudre. Cette première phase est illustrée par la partie a) de la figure 1. Un canal ionisé, aussi appelé « traceur descendant » 81 ou « précurseur », peut progresser depuis la base du nuage 90 vers le sol par bonds successifs de quelques dizaines de mètres avant de se dissocier en plusieurs ramifications à l'approche du sol. Lorsque la distance entre un traceur descendant 81 et le sol diminue, le champ électrique au sol croît jusqu'à atteindre une valeur critique (correspondant à la rigidité diélectrique de l'air qui est de l'ordre de 30kV/cm), initiant alors au sommet de certaines aspérités, par exemple au sommet du bâtiment 60, des décharges corona, entrainées par une ionisation de l'air. Par un processus d'avalanche, si le champ électrique est suffisamment fort, l'ionisation peut s'amplifier et donner naissance à un « traceur ascendant » 82. Lorsque, comme représenté sur la partie b) de la figure 1, un traceur descendant 81 entre en contact avec un traceur ascendant 82, ce qui se produit en général à quelques dizaines de mètres du sol, le canal ionisé complété 80 entre le nuage 90 et le sol entraîne l'écoulement d'un courant de foudre.

Les décharges de foudre intervenant entre deux nuages, ou bien à l'intérieur d'un même nuage présentent des phénomènes similaires à ceux décrits ci-avant en référence à la figure 1 pour une décharge de foudre entre un nuage et le sol.

Il arrive qu'un aéronef soit frappé par la foudre, soit parce que l'aéronef « intercepte » une décharge de foudre dont la naissance est indépendante de la présence de l'aéronef, soit parce que l'aéronef joue un rôle dans la création du canal ionisé, notamment en engendrant un traceur ascendant 82.

Le passage d'un courant de foudre sur un aéronef peut provoquer des dommages plus ou moins sévères. Des effets « directs » du courant de foudre sont par exemple liés au fait qu'il génère des contraintes mécaniques et thermiques très fortes sur la structure de l'aéronef. Ces contraintes sont dues à une élévation très importante de la température et à la formation d'une onde de choc au niveau du point de contact pouvant endommager la structure de l'aéronef. Des effets « indirects » sont parfois également observables : le courant de foudre peut en effet provoquer des perturbations électromagnétiques pouvant mener au dysfonctionnement des équipements électroniques embarqués à bord de l'aéronef, comme par exemple les équipements de navigation ou les équipements de communication.

Pour ces raisons, la protection des aéronefs contre les effets de la foudre reste une préoccupation majeure pour les constructeurs aéronautiques. En effet, la vulnérabilité des aéronefs face aux effets de la foudre a tendance à augmenter avec l'utilisation grandissante de matériaux composites pour la structure des aéronefs, et avec la sensibilité accrue des équipements électroniques aux interférences générées par un courant de foudre. En effet, quand la structure d'un aéronef est principalement métallique, elle se comporte comme une cage de Faraday lorsqu'elle est frappée par la foudre, et elle confère alors aux équipements électroniques embarqués à son bord une immunité maximale. Au contraire, les matériaux composites qui sont de plus en plus utilisés en construction aéronautique sont généralement de moins bons conducteurs électriques, et ils ne présentent pas les mêmes caractéristiques de blindage magnétique que les matériaux métalliques.

Jusqu'à présent, les constructeurs aéronautiques ne cherchent pas à réduire ou à supprimer le risque pour un aéronef de subir un impact de foudre, ce risque ne pouvant pas être totalement éliminé. En pratique, ils cherchent plutôt à améliorer le comportement de l'aéronef en cas d'impact de foudre. Par exemple, un grillage métallique peut être apposée sur une surface d'une pièce en matériau composite afin d'augmenter la conductivité électrique et favoriser la dissipation du courant de foudre lors d'un impact. Ce genre de protection n'est cependant pas adapté aux aéronefs de petite taille pour lesquels le ratio de la surface à traiter de l'aéronef, et donc de la masse du traitement, au volume de l'aéronef est défavorable.

Pour limiter les risques de foudroiement des aéronefs de petite taille, comme par exemple les avions de tourisme, une interdiction de décoller est en général imposée quand une menace orageuse est présente. Cette mesure de précaution est cependant mal adaptée aux petits aéronefs actuellement conçus dans le contexte de la mobilité urbaine pour jouer le rôle de véhicule personnel volant.

Pour protéger contre la foudre des bâtiments au sol ou des bateaux, il existe différentes solutions. Certaines visent à favoriser un impact de foudre en un point déterminé afin de protéger une zone particulière, c'est le cas des paratonnerres. D'autres visent au contraire à éviter un impact de foudre, c'est le cas par exemple des dissipateurs de charges électrostatiques qui cherchent à rendre un objet invisible aux traceurs descendants issus d'un nuage 90. Un tel dispositif vise à dissiper la charge électrique accumulée à une extrémité de l'objet sur lequel il est fixé. Il présente généralement un grand nombre de fines pointes métalliques à la surface desquelles ont lieu de multiples micro-décharges corona conduisant alors à la dissipation de la charge électrique. De tels dispositifs sont par exemple installés au sommet de certains bâtiments, ou bien en haut du mat de certains bateaux. Ils présentent cependant plusieurs inconvénients : d'une part leur forme ne permet pas de les installer sur un aéronef car elle provoque une augmentation de la traînée aérodynamique, d'autre part leur efficacité est limitée et, pour gérer les cas où ils ne parviennent pas à empêcher la formation d'un traceur ascendant, il est préférable de les associer à un paratonnerre et à ses conducteurs de descente qui permettent d'évacuer un courant de foudre.

Dans le domaine de l'aéronautique, des déperditeurs de potentiel sont souvent positionnés sur les bords de fuite de la voilure ou de l'empennage d'un aéronef afin de dissiper la charge électrique accumulée par effet triboélectrique lors du frottement de la structure de l'aéronef avec des particules rencontrées lors d'événements météorologiques particuliers (pluie, neige, grêle, poussière, etc.). Ils prennent alors généralement la forme d'une fine tige réalisée dans un matériau électriquement conducteur. Ces dispositifs cherchent à limiter l'accumulation des charges électrostatiques dont les décharges dans l'air produisent des émissions radioélectriques sources d'interférences sur les systèmes électroniques de l'aéronef. Ils sont cependant inefficaces pour réduire le risque pour l'aéronef d'être touché par la foudre lors d'un orage.

De tels dispositifs sont par exemple divulgués dans le document US2515182. Ce document décrit un dispositif actif déperditeur de potentiel monté sur le bord de fuite d'une voilure. Il comporte un élément conducteur en forme de fourchette dont les extrémités se terminent en pointe. Cet élément est fixé dans une cavité du bord de fuite de la voilure par un isolant. Un bouclier en métal évite une forte concentration de champ électrique à la surface de l'isolant. L'élément déperditeur est relié à une source de courant continu. Des interrupteurs permettent de faire circuler le courant lorsque cela est nécessaire. Ainsi les décharges corona sont régulièrement déclenchées. Ce dispositif nécessite l'installation d'un circuit électrique apte à alimenter l'élément déperditeur. Il faut donc une source d'énergie disponible ainsi qu'une logique de commande des interrupteurs associée. Ce dispositif complexifie la structure de l'avion et engendre un surpoids général.

Le document US3628090 divulgue un appareil à décharge statique comprenant un élément en forme de tige à faible résistance, dont une extrémité est connectée à une partie externe de l'aéronef et son extrémité externe se termine par une électrode sphérique de dimensions prédéterminées.

Le document US3617805 divulgue un dispositif de décharge statique à faible bruit.

Le document FR2163372 divulgue un dispositif déperditeur pour évacuer les charges statiques. Ainsi, alors qu'il est considéré dans le contexte de la mobilité urbaine une utilisation massive de petits aéronefs jouant le rôle véhicules personnels volants, il n'existe pas de système efficace pour réduire significativement le risque pour un tel aéronef d'être touché par la foudre.

Réduire les risques d'un impact de foudre permettrait cependant de diminuer les coûts de maintenance et de réparation des aéronefs liés aux dégâts causés par la foudre, et permettrait de simplifier les moyens de protection mis en oeuvre pour limiter les effets d'un impact de foudre.

### EXPOSE DE L'INVENTION

La présente invention a pour objectif de remédier à tout ou partie des inconvénients de l'art antérieur, notamment ceux exposés ci-avant, en proposant un dispositif qui vise réduire significativement le risque pour un aéronef de subir un impact de foudre.

L'invention trouve une application particulièrement avantageuse, bien que nullement limitative, pour les petits aéronefs actuellement conçus dans le contexte de la mobilité urbaine pour jouer le rôle de véhicule personnel volant. En effet, ce genre d'aéronef est particulièrement vulnérable au risque de foudroiement car d'une part il est destiné à voler à basse altitude par tout temps pour les trajets de la vie quotidienne, et d'autre part, pour des raisons de légèreté, sa structure ne comporte généralement pas de blindage métallique suffisant pour drainer un courant de foudre élevé et limiter les dommages causés par l'accrochage d'un arc de foudre.

A cet effet, et selon un premier aspect, l'invention concerne un système de protection contre la foudre, dit « dispositif anti-foudre », selon la revendication 1.

De telles dispositions permettent de réduire le risque d'impact de foudre au niveau de la zone à protéger en évitant la formation, au niveau de ladite zone, d'une décharge de corona pouvant engendrer un traceur ascendant qui pourrait initier une décharge de foudre.

Selon un deuxième aspect, la présente invention concerne un aéronef comportant un dispositif anti-foudre selon la revendication 9.

D'autres modes de réalisation de l'invention sont définis par les revendications dépendantes.

### PRÉSENTATION DES FIGURES

L'invention sera mieux comprise à la lecture de la description suivante, donnée à titre d'exemple nullement limitatif, et faite en se référant aux figures 1 à 9 qui représentent :
- Figure 1 : une représentation schématique de la formation d'une décharge de foudre entre un nuage et un bâtiment au sol (figure déjà mentionnée dans l'état de la technique),
- Figure 2 : une représentation schématique de la formation d'une décharge de foudre impliquant un aéronef,
- Figure 3 : une représentation schématique du fonctionnement d'un dispositif anti-foudre selon l'invention,
- Figure 4 : une représentation schématique d'un mode particulier de réalisation d'un dispositif anti-foudre selon l'invention,
- Figure 5 : une représentation schématique du fonctionnement d'un élément anti-corona,
- Figure 6 : une représentation schématique d'un dissipateur de charge du dispositif anti-foudre,
- Figure 7 : une représentation schématique détaillée d'une partie du dissipateur de charge représenté à la figure 6,
- Figure 8 : une représentation schématique de l'installation d'un dispositif anti-foudre selon l'invention sur une extrémité de la structure d'un aéronef,
- Figure 9 : une représentation schématique de l'installation d'un dispositif anti-foudre selon l'invention sur un petit aéronef ;

Dans ces figures, des références identiques d'une figure à une autre désignent des éléments identiques ou analogues. Pour des raisons de clarté, les éléments représentés ne sont pas nécessairement à une même échelle, sauf mention contraire.

### DESCRIPTION DÉTAILLÉE DE MODES DE RÉALISATION

La présente invention concerne un dispositif de protection contre la foudre visant à réduire significativement le risque d'un impact de foudre sur un aéronef.

Dans la suite de la description, et pour les raisons évoquées précédemment, on se place à titre d'exemple et de manière non limitative dans le cas d'un petit aéronef 50 envisagé dans un contexte de mobilité urbaine pour être utilisé comme véhicule personnel volant. Il convient cependant de noter que la présente invention est également applicable à d'autres types d'aéronefs qui sont, par leur structure, vulnérable à un impact de foudre, et dont la vitesse est suffisamment faible pour que l'impact aérodynamique d'un dispositif anti-foudre selon l'invention reste acceptable, comme par exemple des drones, des hélicoptères, ou des avions légers du type avion de tourisme ou ULM (« ultra-léger motorisé »). De manière encore plus générale, la présente invention peut également être destinée à d'autres véhicules, comme par exemple des bateaux, voire même à des éléments fixes comme des bâtiments.

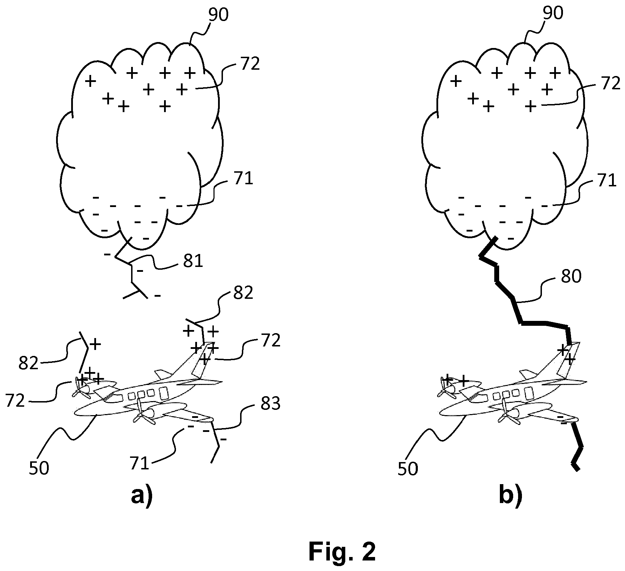

La figure 2 représente la formation d'une décharge de foudre impliquant un aéronef 50. Dans l'exemple représenté à la figure 2, des charges électriques négatives 71 s'accumulent au bas d'un nuage 90, tandis que des charges électriques positives 72 s'accumulent en haut du nuage 90. L'aéronef 50 qui passe à proximité du nuage 90 subit alors un champ électrique qui provoque une répartition des charges électriques 71, 72 présentes sur la structure de l'aéronef 50 vers ses extrémités, comme par exemple le bout des ailes ou le bout des surfaces planes de l'empennage. Selon l'orientation du champ électrique dans lequel baigne l'aéronef 50, les charges électriques 71, 72 accumulées aux extrémités de l'aéronef 50 sont tantôt positives (pour les extrémités situées du côté de la base du nuage 90), tantôt négatives (pour les extrémités situées à l'opposé de la base du nuage 90).

Tel qu'illustré par la partie a) de la figure 2, un traceur descendant 81 peut naître à la base du nuage 90 et progresser de proche en proche par bonds successifs de quelques dizaines de mètres. Ce traceur descendant 81 correspond à l'initiation d'un canal ionisé dans l'air qui transporte une charge électrique et avance vers une zone de charge opposée. Lorsque la distance entre le traceur descendant 81 et l'aéronef 50 diminue, le champ électrique existant au niveau de certaines parties de la structure de l'aéronef 50 peut croître jusqu'à atteindre une valeur critique correspondant à la rigidité diélectrique de l'air, initiant alors des traceurs ascendants 82, 83 par des décharges corona. Ces traceurs ascendants 82, 83 sont tantôt des traceurs ascendants positifs 82, tantôt des traceurs ascendants négatifs 83, selon le signe des charges électriques 71, 72 qui les induisent.

Lorsque, comme représenté sur la partie b) de la figure 2, un traceur descendant 81 négatif entre en contact avec un traceur ascendant positif 82, le canal ionisé complété 80 entre le nuage 90 et l'aéronef 50 entraîne alors l'écoulement d'un courant de foudre pouvant provoquer des dommages plus ou moins importants sur la structure de l'aéronef 50 ou sur ses équipements électroniques. Il convient de noter que la formation d'un tel canal ionisé complété 80 entre le nuage 90 et l'aéronef 50 suppose bien entendu une jonction avec une autre accumulation de charges électriques (dans l'exemple considéré il s'agit d'une accumulation de charges électriques positives), par exemple au sol ou dans un autre nuage. Cette autre accumulation de charges électriques formant l'extrémité finale du canal ionisé complété 80 n'est pas représentée sur la figure 2 dans un souci de simplification.

Il convient de noter que dans l'exemple décrit en référence à la figure 2, le traceur descendant 81 est un traceur descendant négatif, issu de la base du nuage 90 qui est chargée négativement, et conduisant à ce que l'on appelle communément un coup de foudre négatif. Selon un autre exemple, le traceur descendant peut être positif s'il prend son origine dans la partie supérieure du nuage 90 et conduit à un coup de foudre positif s'il rejoint un traceur ascendant négatif 83.

Il convient également de noter que selon encore un autre exemple, un traceur ascendant 82 peut être initié de manière autonome depuis une extrémité de l'aéronef 50 et se diriger vers le nuage 90, déclenchant alors un traceur descendant 81 à la base du nuage 90 puis une décharge de foudre lorsque le traceur ascendant 82 et le traceur descendant 81 se rejoignent.

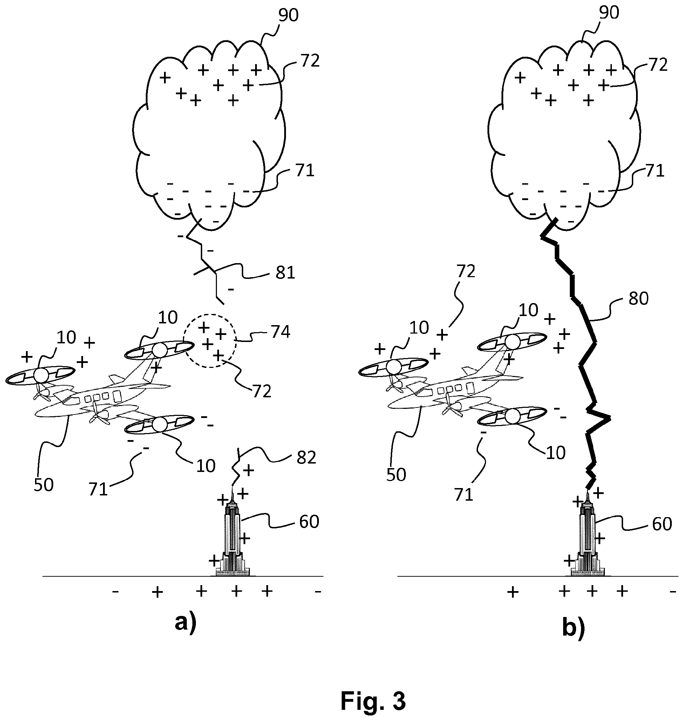

La figure 3 représente une situation analogue à celle représentée à la figure 2, à savoir un aéronef 50 passant à proximité de la base chargée négativement d'un nuage 90. Contrairement à l'aéronef 50 représenté à la figure 2, l'aéronef 50 représenté à la figure 3 comporte plusieurs dispositifs anti-foudre 10 selon l'invention afin de réduire considérablement le risque d'impact de foudre. Dans l'exemple nullement limitatif représenté à la figure 3, l'aéronef 50 comporte un tel dispositif anti-foudre 10 à l'extrémité de chacune de ses deux ailes, ainsi que sur la partie verticale de son empennage.

Sur la partie a) de la figure 3, un traceur descendant 81 a pris naissance à la base du nuage 90 et s'approche de l'aéronef 50 et du sol où se situe notamment un bâtiment 60. L'objectif du dispositif anti-foudre 10 selon l'invention est de rendre l'aéronef 50 « invisible » à l'approche du traceur descendant 81 en évitant ou retardant l'apparition de traceurs ascendants 82, 83 au niveau de la structure de l'aéronef 50. Les moyens mis en oeuvre par le dispositif anti-foudre 10 pour atteindre cet objectif sont multiples et ils seront détaillés dans la suite de la description.

Il s'agit d'une part de dissiper les charges électriques 71, 72 accumulées sur les extrémités de l'aéronef 50 par des micro-décharges corona dont l'ampleur est suffisamment faible pour ne pas initier de traceur ascendant 82. Cette dissipation des charges électriques 71, 72 conduit à une diminution du champ électrique au niveau des extrémités de la structure de l'aéronef 50. Un champ électrique 70 observé localement au niveau d'une extrémité, malgré l'effet de pointe qui tend à augmenter son intensité, n'est alors plus suffisant pour déclencher une décharge corona pouvant conduire à l'apparition d'un traceur ascendant 82. Autrement dit, la dissipation des charges électriques 71, 72 contribue à maintenir l'amplitude du champ électrique 70 existant au voisinage des extrémités de la structure de l'aéronef 50 à une valeur inférieure au seuil d'initiation d'un précurseur. En outre, la charge d'espace 74 engendrée par l'accumulation dans l'air des charges électriques 71, 72 dissipées renforce la limitation du champ électrique 70 au niveau de la surface de l'aéronef 50. Cette charge d'espace 74 génère en effet un champ électrique, dit « champ électrique de charge d'espace », qui s'oppose au champ électrique 70 présent sur la pointe qui lui a donné naissance.

Il s'agit d'autre part, d'adapter la géométrie de la structure de l'aéronef 50 en vue de limiter le gradient de potentiel électrique au niveau de ses extrémités dans le but d'empêcher le déclenchement d'une décharge corona qui pourrait être à l'origine d'un traceur ascendant 82.

Au contraire, un traceur ascendant 82 peut prendre naissance au niveau du sol, par exemple au niveau d'une extrémité haute d'un bâtiment 60. La partie b) de la figure 3, représente le canal ionisé complété 80 engendré par la rencontre du traceur descendant 81 avec le traceur ascendant 82 émanant du bâtiment 60. Un courant de foudre peut alors s'écouler à travers ce canal. En empêchant la formation d'un traceur ascendant 82 au niveau de l'aéronef 50, le dispositif anti-foudre 10 a permis d'éviter un impact de foudre sur l'aéronef 50.

Il convient de noter que l'objectif du dispositif anti-foudre 10 est non seulement de rendre l'aéronef 50 invisible à un éventuel traceur descendant 81 issu du nuage 90, mais aussi d'éviter la formation autonome d'un traceur ascendant 82 (indépendamment à l'existence d'un traceur descendant 81).

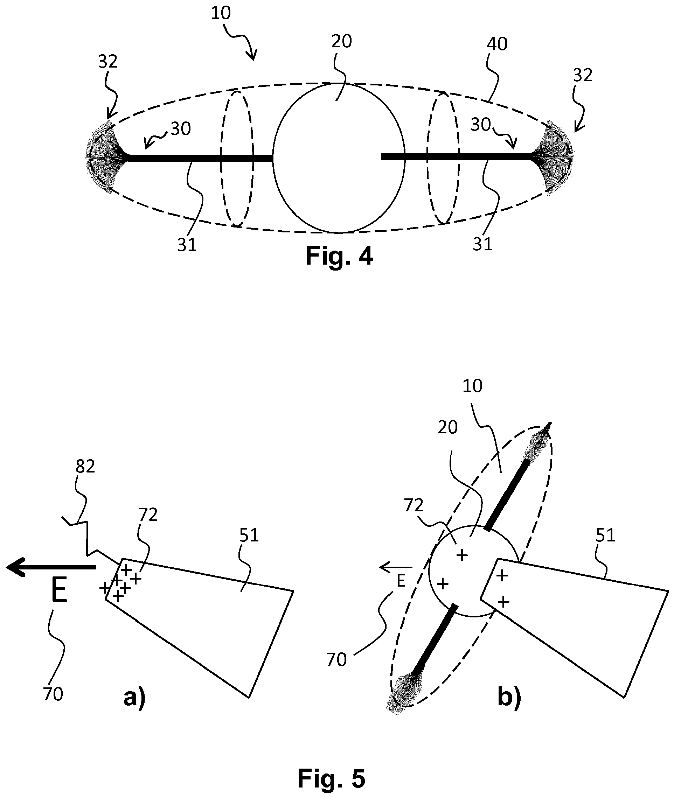

La figure 4 représente un mode particulier de réalisation d'un dispositif anti-foudre 10 selon l'invention. Il comprend d'une part un élément anti-corona 20 qui présente une forme arrondie et une surface électriquement conductrice, par exemple une sphère métallique. Cet élément 20 est qualifié d' « anti-corona » car il a pour objectif d'empêcher le déclenchement d'une décharge corona qui pourrait être à l'origine d'un traceur ascendant 82. Cet élément anti-corona 20 sera décrit plus en détail ultérieurement en référence à la figure 5.

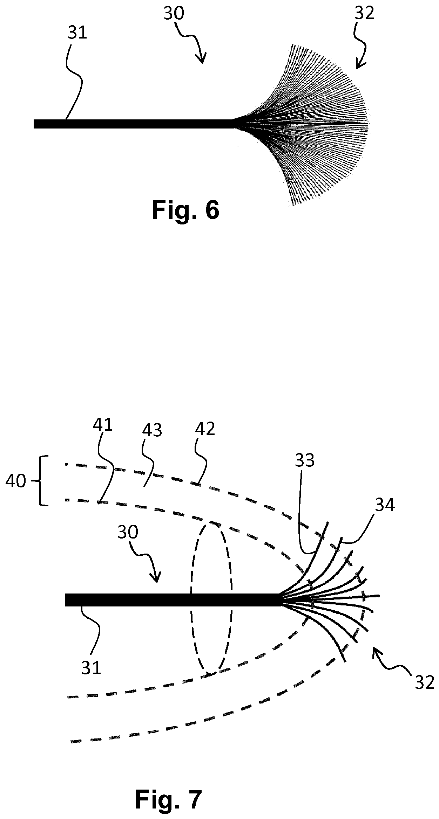

Le dispositif anti-foudre 10 comporte d'autre part deux dissipateurs 30 de charges qui s'étendent radialement de l'élément anti-corona 20 en deux points diamétralement opposés. Chaque dissipateur 30 de charges comprend une tige 31 dont une extrémité est fixée à l'élément anti-corona 20 et dont l'autre extrémité sert de point d'attache à un ensemble 32 de brins 33 électriquement conducteurs. La fonction des dissipateurs 30 est de dissiper (autrement dit d'évacuer dans l'air environnant) les charges électriques 71, 72 accumulées sur les extrémités de l'aéronef 50 par des micro-décharges corona dont l'ampleur est suffisamment faible pour ne pas initier de traceur ascendant 82. Un tel dissipateur 30 de charges sera décrit plus en détail ultérieurement en référence aux figures 6 et 7.

Il convient de noter que le nombre de dissipateurs 30 de charges que comporte le dispositif anti-foudre 10 peut varier, et ce choix ne constitue qu'une variante de réalisation de l'invention.

Le dispositif anti-foudre 10 est destiné à être fixé dans des zones de l'aéronef 50 correspondant à des zones d'accrochage d'un arc de foudre, en particulier à l'extrémité d'une partie saillante de la structure de l'aéronef 50, par exemple au bout d'une aile 51 ou au bout de l'empennage 52.

Pour limiter l'impact aérodynamique du dispositif anti-foudre, l'élément anti-corona 20 et les deux dissipateurs 30 de charges sont intégrés dans une coque 40 diélectrique, réalisée par exemple en fibre de verre, dont la forme minimise sa traînée aérodynamique. La coque 40 présente une forme d'ellipsoïde dont le centre coïncide avec le centre de la sphère de l'élément anti-corona 20 et dont le plus grand axe est orienté selon les tiges 31 des dissipateurs 30 de charge. Les brins 33 des dissipateurs 30 de charges sont agencés de telle sorte que seule une partie de leur longueur dépasse de la coque 40 diélectrique à proximité de chaque extrémité de l'ellipsoïde suivant son plus grand axe. Outre les performances aérodynamiques, la coque 40 diélectrique peut également avoir un rôle de protection mécanique (par exemple contre des chocs) et/ou chimique (par exemple contre des agressions du type corrosion), et peut aussi accessoirement présenter un intérêt esthétique. Il sera aussi expliqué ultérieurement comment la coque 40 diélectrique contribue à augmenter l'efficacité des dissipateurs 30 de charges.

Il convient de noter que l'invention peut évidemment être réalisée en choisissant une autre forme pour la coque 40 diélectrique. Par exemple chaque extrémité de la coque 40 diélectrique peut être en forme d'ogive, éventuellement tronquée par une sphère, ou bien la coque 40 diélectrique peut être en forme d'ovoïde ou en forme de goutte d'eau. La forme peut évidemment être optimisée, de manière conventionnelle, par des tests de soufflerie dans le but d'optimiser son aérodynamisme. Dans l'exemple considéré, la coque 40 diélectrique est une coquille creuse dont la paroi a une épaisseur adaptée à la résistance aux efforts aérodynamiques subis en utilisation compte tenu du matériau utilisé.

Dans une forme de réalisation, la partie vide de la coque 40 est remplie d'un matériau alvéolaire, par exemple une mousse polyuréthane, qui permet d'apporter une rigidité à ladite coque avec une pénalité de masse minime.

Dans des modes particuliers de réalisation, le dispositif anti-foudre 10 ne comporte pas de coque 40 diélectrique. C'est par exemple le cas lorsque l'aérodynamique, la protection vis-à-vis de l'environnement, voire l'esthétique, n'ont que peu ou pas d'importance pour l'objet protégé par le dispositif anti-foudre 10.

La figure 5 illustre schématiquement l'intérêt de l'élément anti-corona 20 faisant partie du dispositif anti-foudre 10 selon le mode de réalisation décrit en référence à la figure 4.

La partie a) de la figure 5 représente une concentration de charges électriques positives 72 accumulées au niveau de l'extrémité d'une aile 51 d'un aéronef 50. Cet excès de charges électriques positives 72 au niveau de l'extrémité d'une aile 51 d'un aéronef 50 peut notamment être observé lorsque l'aéronef 50 est soumis à un champ électrique induit par la présence d'un nuage 90 chargé négativement. Les charges électriques 71, 72 présentes sur la structure de l'aéronef 50 se séparent et se déplacent selon le champ électrique. Cela entraîne un déséquilibre électrostatique sur la structure de l'aéronef 50 et des accumulations de charges électriques 71, 72 au niveau des extrémités. Les accumulations de charges électriques 71, 72 peuvent être positives (comme sur l'exemple illustré par la figure 4) ou négatives, selon l'orientation du champ électrique par rapport à la structure de l'aéronef 50 et selon l'orientation de l'extrémité considérée.

Tel que représenté sur la partie a) de la figure 5, un champ électrique 70 s'intensifie alors au niveau de l'accumulation des charges électriques 72 en raison de l'effet de pointe. Si son amplitude dépasse une valeur critique correspondant à la rigidité diélectrique de l'air, alors des décharges corona peuvent se produire. Une telle décharge corona peut être à l'origine d'un traceur ascendant 82 qui, s'il entre en contact avec un traceur descendant 81 issu d'un nuage 90, peut conduire à un impact de foudre au niveau de l'extrémité de l'aile 51.

Il convient de noter que d'autres phénomènes peuvent participer à la charge électrostatique d'un aéronef. Notamment, les particules de précipitation (gouttelettes d'eau, glace, cristaux de neige, poussière, etc.) échangent des charges électriques avec l'aéronef par effet triboélectrique. Aussi, des mécanismes physiques à l'intérieur de la chambre de combustion des moteurs d'un aéronef peuvent avoir pour conséquences une expulsion de charges électriques positives, laissant alors des charges négatives sur la structure de l'aéronef. Un dispositif anti-foudre 10 participe également à la protection électrostatique d'un aéronef 50, voire il peut remplacer totalement les déperditeurs statiques traditionnellement utilisés pour le protéger.

La partie b) de la figure 5 représente schématiquement l'extrémité d'une aile 51 d'un aéronef 50 à laquelle un dispositif anti-foudre 10 a été fixé. Dans l'exemple considéré, l'élément anti-corona 20 est une sphère en alliage d'aluminium d'une trentaine de centimètres de diamètre qui enveloppe entièrement l'extrémité de l'aile 51. Compte tenu de l'effet de pointe, le champ électrique 70 observé au niveau d'un élément conducteur est généralement d'autant plus grand que l'élément en question est pointu, anguleux ou acéré. L'élément anti-corona 20 procure une forme arrondie à l'extrémité de l'aile 51. Cette forme a pour effet de réduire l'amplitude du champ électrique 70 observé au niveau de l'extrémité de l'aile 51 en supprimant, au moins en partie, l'effet de pointe. Le gradient de potentiel électrique au niveau de l'extrémité de l'aile 51 est alors plus faible car les charges électriques positives 72 se répartissent sur toute la surface de la sphère métallique. Il est ainsi possible, pour des dimensions appropriées de l'élément anti-corona 20 par rapport aux dimensions de l'aile 51, de maintenir le champ électrique 70 existant au voisinage de l'extrémité de l'aile 51 à une valeur d'amplitude inférieure au seuil de déclenchement d'une décharge corona suffisamment forte pour déclencher un traceur ascendant 82. Le risque d'être touché par la foudre est alors considérablement réduit.

De manière connue, des tests sous haute tension peuvent être réalisés en laboratoire pour optimiser les caractéristiques de l'élément anti-corona 20, notamment sa forme, ses dimensions, et le matériau utilisé. Ces tests peuvent être réalisés par modélisation numérique assistée par ordinateur en fonction des caractéristiques de la structure de l'aéronef 50.

Il convient de noter que dans le mode particulier de réalisation décrit en référence à la figure 4, et dans l'exemple représenté à la partie b) de la figure 5, l'élément anti-corona 20 prend la forme d'une sphère métallique liée à l'aile 51 de l'aéronef 50 de telle sorte qu'elle enveloppe l'extrémité de ladite aile 51. Pour des raisons évidentes de masse, cette sphère est avantageusement creuse, seule sa surface extérieure étant importante dans les effets recherchés. Selon d'autres exemples, l'élément anti-corona 20 pourrait avoir une autre forme aux contours arrondis, comme par exemple un tore ou un anneau, ou bien être réalisé dans un matériau composite qui serait métallisé en surface.

Dans des modes particuliers de réalisation, l'élément anti-corona 20 fait partie intégrante de l'aile 51 et correspond ainsi à une forme particulière de l'extrémité de l'aile 51. Il est alors intégré à la structure de l'aéronef 50 lors de la phase d'assemblage de la structure considérée.

La figure 6 représente schématiquement un des deux dissipateurs 30 de charges faisant partie du dispositif anti-foudre 10 selon le mode de réalisation décrit en référence à la figure 4. Il comprend une tige 31 dont une extrémité sert de point d'attache à un ensemble 32 de brins 33. La tige 31 et les brins 33 sont conducteurs de l'électricité. Le moyen de fixation utilisé pour attacher les brins 33 à l'extrémité de la tige 31 est tel qu'il permet une connexion électrique entre la tige 31 et chaque brin 33. De préférence, les brins 33 ne sont pas torsadés.

Dans l'exemple considéré, la tige 31 est en acier et les brins 33 sont en fibre de carbone. La résistivité électrique d'un brin 33 est ainsi largement (au moins 100 fois) supérieure à celle de la tige 31. La tige 31 est d'environ 20 cm de longueur et 1 cm de diamètre, la longueur de chaque brin 33 est de l'ordre de 5 à 10 cm. L'épaisseur d'un brin 33 est d'environ 100 µm. L'ensemble 32 est composé de plusieurs dizaines de brins 33.

Le principe de fonctionnement d'un tel dissipateur 30 de charges repose sur l'effet de pointe, c'est-à-dire que l'amplitude du champ électrique au voisinage d'un conducteur porté à un certain potentiel électrique est d'autant plus grande que le conducteur est fin. D'autre part, une décharge corona entraînée par l'ionisation de l'air ambiant entourant le conducteur n'apparaît que si l'amplitude du champ électrique au voisinage du conducteur est supérieure à une valeur critique correspondant à la rigidité diélectrique de l'air. La puissance dissipée par une décharge corona est d'autant plus faible que le conducteur est fin et que sa résistivité électrique est forte. Ainsi, en utilisant des brins 33 en fibre de carbone fins et résistifs, la génération de petites décharges corona très peu énergétiques (on parle de « micro-décharges corona ») est favorisée. Ces micro-décharges corona sont d'ampleur suffisamment faible pour ne pas engendrer un traceur ascendant 82. En regroupant un ensemble 32 de brins 33, on obtient une multitude de micro-décharges corona qui sont décorrélées les unes des autres et qui sont adaptées pour décharger efficacement une partie de la structure d'un aéronef 50 sans présenter le risque de générer un traceur ascendant 82 qui pourrait conduire à une décharge de foudre.

Ainsi, la forme et la dimension des brins 33 permettent de créer un renforcement de champ dans un volume extrêmement réduit au voisinage de chaque brin 33, aboutissant à des conditions favorables pour la dissipation de charges par effet corona, mais défavorables à une transformation de ces décharges corona en précurseurs pour la foudre.

La figure 7 illustre comment la tige 31 et les brins 33 du dissipateur 30 de charges sont intégrés dans la coque 40 diélectrique qui, dans l'exemple considéré, est une coquille creuse dont la paroi 43 en fibre de verre a une épaisseur de quelques centimètres. L'épaisseur de la paroi est choisie en fonction du matériau utilisé de manière à présenter une résistance mécanique adaptée aux efforts aérodynamiques subis en utilisation. La paroi 43 de la coque 40 diélectrique présente une surface interne 41 et une surface externe 42.

Pour que la figure soit plus claire, seulement une dizaine de brins 33 ont été représentés. La longueur et la disposition des brins 33 sont adaptées à la forme ellipsoïdale de la coque 40 diélectrique, de telles dispositions ayant notamment pour objectif d'améliorer l'aérodynamisme du dispositif anti-foudre 10. Il apparaît en particulier sur la figure 7 que seule une petite extrémité 34 de chaque brin 33 dépasse de la coque 40 diélectrique, par exemple entre 1 % et 10% de la longueur du brin 33 dépasse de la coque 40. C'est par cette extrémité 34 qu'auront lieu les micro-décharges corona dans l'air. Les caractéristiques de la tige 31 et des brins 33 telles que le matériau utilisé, leur épaisseur, leur longueur, leur agencement, leur nombre, etc., peuvent par exemple être définies en laboratoire, de manière conventionnelle, à l'aide de tests sous haute tension. La longueur de la partie du brin 33 qui dépasse de la coque (40) diélectrique doit être suffisamment grande pour permettre la dissipation des charges électriques et suffisamment petite pour limiter leur fragilité. Il convient d'optimiser cette longueur par des tests. Par exemple, une extrémité 34 de chaque brin 33 dépasse de la coque 40 diélectrique d'une longueur au moins égale à 10% de l'épaisseur de la coque 40 traversée par ledit brun 33.

Outre l'amélioration de l'aérodynamisme du dispositif anti-foudre 10, la coque 40 diélectrique présente un avantage supplémentaire induit par une distorsion et un renforcement du champ électrique local existant au niveau des extrémités 34 des brins 33 du dissipateur 30 de charges à cause de la permittivité du diélectrique. Ainsi, sans impacter globalement le risque de générer une décharge corona suffisamment forte pour initier un traceur ascendant 82, ce phénomène favorise localement la génération des micro-décharges corona au niveau des extrémités 34 des brins 33 du dissipateur 30 de charge, ce qui permet par conséquent d'améliorer la dissipation des charges électriques 71, 72 accumulées sur la partie de la structure de l'aéronef 50 à laquelle est fixé le dispositif anti-foudre 10.

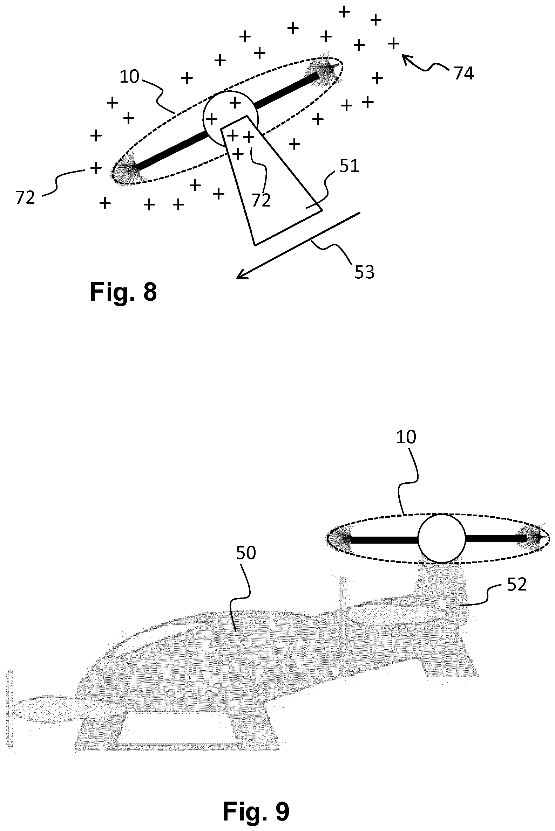

La figure 8 représente schématiquement un dispositif anti-foudre 10 selon le mode de réalisation décrit en référence à la figure 4 et fixé à l'extrémité d'une partie saillante de la structure de l'aéronef 50. Dans l'exemple illustré à la figure 8, le dispositif anti-foudre 10 est fixé à l'extrémité d'une aile 51 de telle sorte que l'élément anti-corona 20 enveloppe une nervure d'extrémité de l'aile 51. Ainsi, les parties anguleuses à l'extrémité de l'aile 51, susceptibles d'induire des effets de pointe sur le champ électrique, sont supprimées. Dans l'exemple considéré, une accumulation de charges électriques positives 72 s'est formée à l'extrémité de l'aile 51, par exemple sous l'effet d'un champ électrique induit par la présence d'un nuage 90.

De manière avantageuse, l'axe formé par les tiges 31 des deux dissipateurs 30 de charges (qui dans l'exemple considéré coïncide avec le plus grand axe de l'ellipsoïde formé par la coque 40 diélectrique) est orienté selon la direction 53 principale de l'aéronef 50. De telles dispositions présentent au moins deux avantages. Un premier avantage est de permettre de limiter l'impact du dispositif anti-foudre 10 sur la traînée de l'aéronef 50. En effet, les sommets de l'ellipsoïde formé par la coque 40 diélectrique sont positionnés de telle sorte que l'écoulement de l'air sur le dispositif anti-foudre 10 est optimal lors du déplacement de l'aéronef 50. Un deuxième avantage réside dans le fait que l'ensemble des charges électriques 72 dissipées par les deux dissipateurs 30 de charges vont former une zone de charge d'espace 74 qui va envelopper l'extrémité de l'aile 51 et qui va ainsi limiter le champ électrique 70 observé au niveau de l'extrémité de l'aile 51. Le positionnement des dissipateurs 30 de charges selon la direction 53 principale de déplacement de l'aéronef 50 est en effet telle que les charges électriques 72 dissipées dans l'air par le dissipateur 30 situé vers l'avant de l'aéronef 50 vont sensiblement longer la surface de la coque 40 diélectrique selon son plus grand axe avant d'être évacuées. Cet écoulement des charges électriques 72 dans l'air à proximité et le long de la surface de la coque 40 diélectrique engendré par le déplacement de l'aéronef 50 permet ainsi d'envelopper l'extrémité de l'aile 51 dans une zone de charge d'espace 74.

Dans des modes particuliers de réalisation, la coque 40 diélectrique présente une ouverture de telle sorte qu'une partie de l'élément anti-corona 20 affleure de la surface externe 42 de la coque 40. De cette manière, si un impact de foudre devait avoir lieu malgré tous les moyens mis en oeuvre par le dispositif anti-foudre 10, le point d'impact de foudre se produirait préférentiellement au niveau de cette partie afifleurante de l'élément anti-corona 20, limitant ainsi le risque d'une perforation de la coque 40 et une détérioration du dispositif anti-foudre 10. La zone afifleurante de l'élément anti-corona 20 peut être peinte pour éviter des phénomènes de corrosion et/ou pour un aspect esthétique.

La figure 9 illustre un exemple d'installation d'un dispositif anti-foudre 10 selon l'invention sur un petit aéronef 50 jouant le rôle de véhicule personnel volant. Sur l'exemple représenté à la figure 9, le dispositif anti-foudre 10 suit le mode particulier de réalisation décrit en référence à la figure 4, et il est fixé à l'extrémité supérieure de la partie verticale de l'empennage 52 de l'aéronef 50.

Il convient de noter qu'il s'agit là d'un exemple nullement limitatif, et que dans d'autres variantes, le dispositif anti-foudre 10 pourrait aussi être placé à l'extrémité inférieure de la partie verticale de l'empennage 52, ou bien, selon la forme de la structure de l'aéronef 50, au bout des ailes 51 ou bien à l'extrémité d'autres parties saillantes où des décharges corona ont tendance à se développer naturellement. Avantageusement, plusieurs dispositifs anti-foudre 10 peuvent être disposés à différents endroits de la structure de l'aéronef 50 correspondant à des zones susceptibles d'accrocher un arc de foudre.

Les moyens de fixation d'un dispositif anti-foudre 10 à la structure de l'aéronef 50 ne sont pas détaillés car ils sortent du cadre de l'invention. Ils peuvent être mis en oeuvre par les méthodes conventionnelles d'assemblage des pièces d'un aéronef (soudure, collage, rivetage, vissage, etc.). Il convient cependant d'assurer la continuité électrique entre l'élément anti-corona 20 et la zone de la structure de l'aéronef 50 protégée par le dispositif anti-foudre 10, de sorte que des charges électriques 71, 72 accumulées sur ladite zone puissent se répartir sur la surface de l'élément anti-corona 20.

La description ci-avant illustre clairement que, par ses différentes caractéristiques et leurs avantages, la présente invention atteint les objectifs fixés. En particulier, le dispositif anti-foudre 10 réduit considérablement le risque de foudroiement d'un aéronef 50 tout en limitant son impact sur sa traînée aérodynamique. Le poids et le coût de fabrication d'un tel dispositif restent également particulièrement avantageux.

L'invention combine avantageusement deux éléments dont les fonctions intrinsèques sont opposées, mais dont la combinaison remplit les objectifs recherchés. En effet, l'invention implique d'une part un élément anti-corona 20 dont la fonction est d'empêcher la formation d'une décharge corona qui pourrait conduire à un traceur ascendant 82 pouvant initier une décharge de foudre, et d'autre part deux dissipateurs 30 de charges dont la fonction est de générer des décharges corona de faible ampleur pour dissiper une accumulation de charges électriques.

Il y a une coopération des différents éléments du dispositif anti-foudre 10 pour diminuer l'effet de pointe d'une extrémité de la structure d'un aéronef 50 :
- l'élément anti-corona 20 diminue le gradient de potentiel au niveau de l'extrémité à protéger,
- les dissipateurs 30 de charges réduisent le potentiel électrique de l'extrémité à protéger,
- la position des dissipateurs 30 de charges permet d'envelopper l'extrémité à protéger dans une zone de charge d'espace 74, de telle sorte qu'elle n'apparaît plus comme une pointe électrique,
- la coque 40 diélectrique, s'il y en a une, améliore l'efficacité des dissipateurs 30 de charge.

C'est bien la combinaison de plusieurs de ces effets qui confère au dispositif anti-foudre 10 selon l'invention une efficacité significative.

De manière générale, il est à noter que les modes de réalisation considérés ci-dessus ont été décrits à titre d'exemples non limitatifs, et que d'autres variantes sont par conséquent envisageables.

Notamment, le nombre de dissipateurs 30 de charges que comporte le dispositif anti-foudre 10 n'est pas limité à deux. Un dispositif anti-foudre 10 selon l'invention peut en effet comporter un nombre de dissipateurs 30 de charges supérieur à deux. Aussi, les caractéristiques d'un tel dissipateur 30 de charges peuvent varier. Dans l'exemple considéré, la tige 31 est en acier et les brins 33 sont en fibre de carbone. D'autres matériaux conducteurs de l'électricité peuvent cependant être envisagés pour la réalisation d'un dissipateur 30 de charge. Préférentiellement, la tige 31 est en métal, et les brins 33 sont réalisés dans un matériau conducteur de plus forte résistivité électrique (par exemple au moins 100 fois supérieure à celle de la tige 31) et ils ont un diamètre particulièrement fin (par exemple entre 50 µm et 500 µm) pour limiter l'intensité des micro-décharges corona.

Dans l'exemple considéré, l'élément anti-corona 20 est une sphère métallique creuse réalisée dans un alliage d'aluminium. Rien n'exclut cependant d'envisager d'autres formes arrondies pour l'élément anti-corona 20, comme par exemple un ovoïde, un tore, un anneau, etc. Aussi, un autre matériau peut être choisi s'il présente une bonne conductivité électrique en surface et une relative légèreté.

Dans l'exemple considéré, la coque 40 diélectrique a la forme d'une ellipsoïde et elle est réalisée en fibre de verre pour sa résistance aux contraintes mécaniques et ses propriétés d'isolation électrique. Rien n'exclut cependant d'envisager d'autres formes et d'autres matériaux pour la réalisation de la coque 40 diélectrique, voire même de ne pas utiliser de coque 40 diélectrique, par exemple si l'aérodynamique et la protection vis-à-vis de l'environnement n'ont que peu ou pas d'importance pour l'objet protégé par le dispositif anti-foudre 10.

Les dimensions des différents éléments du dispositif anti-foudre 10 sont choisies en fonction des dimensions des parties de la structure de l'aéronef 50 qu'il convient de protéger contre un accrochage d'un arc de foudre. Aussi, les dimensions indiquées dans les modes de réalisation décrits ont été données à titre d'exemple nullement limitatif.

L'invention a été décrite à titre d'exemple nullement limitatif en considérant le cas d'un aéronef 50 de petite taille développé pour jouer le rôle de véhicule personnel volant. En effet, un tel aéronef 50 est destiné à voler à basse altitude par tout temps pour les trajets de la vie quotidienne, et sa structure particulièrement légère pour favoriser une faible consommation énergétique ne lui fournit généralement qu'une protection limitée contre les dommages causés par la foudre (car sa structure ne contient pas de blindage métallique permettant de drainer un courant de foudre et de limiter les dommages causés par l'accrochage d'un arc de foudre). Rien n'exclut cependant, suivant d'autres exemples, de considérer d'autres types de véhicules, qu'ils soient aériens, maritimes ou terrestres, voire même d'utiliser un dispositif anti-foudre 10 pour protéger des objets fixes comme par exemple certaines parties d'un bâtiment.

## Revendications

1. Dispositif anti-foudre (10) pour aéronef (50), comportant d'une part un élément anti-corona (20) présentant une forme arrondie et une surface conductrice d'électricité, destinée à envelopper une zone de la structure de l'aéronef (50) susceptible d'accrocher un arc de foudre, et d'autre part deux dissipateurs (30) de charges électriques fixé audit élément anti-corona (20), l'élément anti-corona (20) et les dissipateurs (30) de charge étant intégrés dans une coque diélectrique (40), **caractérisé en ce que** :
• les dissipateurs (30) de charges comportent chacun une tige (31) conductrice de l'électricité dont une extrémité est fixée à l'élément anti-corona (20) et dont l'autre extrémité sert de point d'attache à un ensemble (32) de brins (33) conducteurs de l'électricité dont seule une extrémité (34) de chaque brin distale de la tige (31) dépasse de la coque (40) diélectrique, et
• l'élément anti-corona (20) est sensiblement une sphère, la coque (40) diélectrique a sensiblement la forme d'un ellipsoïde dont le centre coïncide sensiblement avec le centre de l'élément anti-corona (20), et chaque dissipateur (30) de charges s'étend radialement de l'élément anti-corona (20) en deux points diamétralement opposés selon le plus grand axe de l'ellipsoïde formé par la coque (40) diélectrique.

2. Dispositif anti-foudre (10) selon la revendication 1 dans lequel un dissipateur (30) de charges comporte une tige (31) conductrice de l'électricité dont une extrémité est fixée à l'élément anti-corona (20) et dont l'autre extrémité sert de point d'attache à un ensemble (32) de brins (33) conducteurs de l'électricité.

3. Dispositif anti-foudre (10) selon la revendication 1 à 2 **caractérisé en ce que** chaque dissipateur (30) de charges traverse au moins partiellement ladite coque (40) diélectrique.

4. Dispositif anti-foudre (10) selon les revendications 1 à 3 dans lequel une partie de la surface conductrice de l'élément anti-corona (20) affleure à une surface externe (42) de la coque (40) diélectrique pour constituer une zone préférentielle d'accrochage d'un arc de foudre.

5. Dispositif anti-foudre (10) selon la revendication 1 dans lequel l'ensemble (32) de brins (33) de chaque dissipateur (30) de charges épouse la forme d'un sommet de l'ellipsoïde formé par la coque (40) diélectrique.

6. Dispositif anti-foudre (10) selon la revendication 1 dans lequel pour chaque dissipateur (30) l'extrémité (34) d'un brin (33) distale de la tige (31) dépasse de la coque (40) diélectrique d'une longueur au moins égale à 10% d'une épaisseur de ladite coque (40) diélectrique traversée par ledit brin (33).

7. Dispositif anti-foudre (10) selon les revendications 1 ou 2 dans lequel chaque brin (33) a un diamètre compris entre 50 et 500 µm et est réalisé dans un matériau conducteur dont la résistivité électrique est au moins 100 fois supérieure à celle d'une tige (31).

8. Dispositif anti-foudre (10) selon l'une des revendications 1 à 7 dans lequel l'élément anti-corona (20) est formé dans un alliage d'aluminium.

9. Aéronef (50) **caractérisé en ce qu'**il comporte un dispositif anti-foudre (10) selon l'une des revendications 1 à 8.

10. Aéronef (50) **caractérise en ce que** sa structure intègre un dispositif anti-foudre (10) selon la revendication 1 de telle sorte que le grand axe de l'ellipsoïde formée par la coque (40) diélectrique coïncide sensiblement avec la direction principale de déplacement de l'aéronef (50).

## Patentansprüche

1. Blitzableitervorrichtung (10) für ein Luftfahrzeug (50), umfassend einerseits ein Antikoronaelement (20), das eine rundliche Form und eine elektrisch leitende Oberfläche aufweist und dazu bestimmt ist, einen Bereich der Struktur des Luftfahrzeugs (50), der dazu neigt, einen Blitz anzuziehen, zu umgeben, und andererseits zwei Ableiter (30) für elektrische Ladungen, die an dem Antikoronaelement (20) befestigt sind, wobei das Antikoronaelement (20) und die Ladungsableiter (30) in ein dielektrisches Gehäuse (40) integriert sind, **dadurch gekennzeichnet, dass**:
• die Ladungsableiter (30) jeweils einen elektrisch leitenden Stab (31) umfassen, dessen eines Ende an dem Antikoronaelement (20) befestigt ist und dessen anderes Ende als Befestigungspunkt für einen Satz (32) von elektrisch leitenden Fasern (33) dient, wobei nur ein zu dem Stab (31) distales Ende (34) jeder Faser über das dielektrische Gehäuse (40) hinausragt, und
• das Antikoronaelement (20) im Wesentlichen eine Kugel ist, wobei das dielektrische Gehäuse (40) im Wesentlichen die Form eines Ellipsoids aufweist, dessen Mitte im Wesentlichen mit der Mitte des Antikoronaelements (20) zusammenfällt, und wobei sich jeder Ladungsableiter (30) gemäß der längsten Achse des Ellipsoids, das durch das dielektrische Gehäuse (40) gebildet wird, an zwei diametral entgegengesetzten Punkten radial von dem Antikoronaelement (20) erstreckt.

2. Blitzableitervorrichtung (10) nach Anspruch 1, wobei ein Ladungsableiter (30) einen elektrisch leitenden Stab (31) umfasst, dessen eines Ende an dem Antikoronaelement (20) befestigt ist und dessen anderes Ende als Befestigungspunkt für einen Satz (32) von elektrisch leitenden Fasern (33) dient.

3. Blitzableitervorrichtung (10) nach Anspruch 1 bis 2, **dadurch gekennzeichnet, dass** jeder Ladungsableiter (30) das dielektrische Gehäuse (40) mindestens teilweise durchquert.

4. Blitzableitervorrichtung (10) nach den Ansprüchen 1 bis 3, wobei ein Teil der leitenden Oberfläche des Antikoronaelements (20) an eine Außenoberfläche (42) des dielektrischen Gehäuses (40) angrenzt, um einen bevorzugten Bereich zum Anziehen eines Blitzes zu bilden.

5. Blitzableitervorrichtung (10) nach Anspruch 1, wobei sich der Satz (32) von Fasern (33) jedes Ladungsableiters (30) der Form eines Scheitelpunkts des Ellipsoids, das durch das dielektrische Gehäuse (40) gebildet wird, anpasst.

6. Blitzableitervorrichtung (10) nach Anspruch 1, wobei bei jedem Ableiter (30) das zu dem Stab (31) distale Ende (34) einer Faser (33) um eine Länge von mindestens gleich 10 % einer Dicke des dielektrischen Gehäuses (40), das von der Faser (33) durchquert wird, über das dielektrische Gehäuse (40) hinausragt.

7. Blitzableitervorrichtung (10) nach den Ansprüchen 1 oder 2, wobei jede Faser (33) einen Durchmesser zwischen 50 und 500 µm aufweist und aus einem leitenden Material hergestellt ist, dessen elektrischer Widerstand mindestens 100 Mal größer als der eines Stabs (31) ist.

8. Blitzableitervorrichtung (10) nach einem der Ansprüche 1 bis 7, wobei das Antikoronaelement (20) aus einer Aluminiumlegierung gebildet ist.

9. Luftfahrzeug (50), **dadurch gekennzeichnet, dass** es eine Blitzableitervorrichtung (10) nach einem der Ansprüche 1 bis 8 umfasst.

10. Luftfahrzeug (50), **dadurch gekennzeichnet, dass** seine Struktur eine Blitzableitervorrichtung (10) nach Anspruch 1 derart integriert, dass die lange Achse des Ellipsoids, das durch das dielektrische Gehäuse (40) gebildet wird, im Wesentlichen mit der Hauptfortbewegungsrichtung des Luftfahrzeugs (50) zusammenfällt.

## Claims

1. Lightning protection device (10) for an aircraft (50), comprising, on the one hand, an anti-corona element (20) which has a rounded form and an electrically conductive surface, which is intended to envelop an area of the structure of the aircraft (50) which is liable to receive a lightning strike, and, on the other hand, two electric charge dissipators (30) fixed to said anti-corona element (20), the anti-corona element (20) and the charge dissipators (30) being incorporated into a dielectric shell (40), **characterized in that**:
● the charge dissipators (30) each comprise an electrically conductive rod (31), one end of which is attached to the anti-corona element (20) and the other end of which acts as an attachment point for a set (32) of electrically conductive filaments (33), only an end (34) of each filament which is distal from the rod (31) protruding from the dielectric shell (40), and
● the anti-corona element (20) is substantially a sphere, the dielectric shell (40) substantially has the shape of an ellipsoid the centre of which substantially coincides with the centre of the anti-corona element (20), and each charge dissipator (30) extends radially from the anti-corona element (20) at two diametrically opposite points along the major axis of the ellipsoid formed by the dielectric shell (40) .

2. Lightning protection device (10) according to Claim 1, in which a charge dissipator (30) comprises an electrically conductive rod (31), one end of which is attached to the anti-corona element (20) and the other end of which acts as an attachment point for a set (32) of electrically conductive filaments (33).

3. Lightning protection device (10) according to Claims 1 and 2, **characterized in that** each charge dissipator (30) at least partially passes through said dielectric shell (40).

4. Lightning protection device (10) according to Claims 1 to 3, in which part of the conductive surface of the anti-corona element (20) is flush with an outer surface (42) of the dielectric shell (40) so as to form an area in which a lightning strike is preferably received.

5. Lightning protection device (10) according to Claim 1, in which the set (32) of filaments (33) of each charge dissipator (30) conforms to the shape of a vertex of the ellipsoid formed by the dielectric shell (40).

6. Lightning protection device (10) according to Claim 1, in which, for each dissipator (30), the end (34) of a filament (33) which is distal from the rod (31) protrudes from the dielectric shell (40) by a length which is at least equal to 10% of a thickness of said dielectric shell (40) which said filament (33) passes through.

7. Lightning protection device (10) according to Claim 1 or 2, in which each filament (33) has a diameter of between 50 and 500 um and is made from a conductive material the electrical resistivity of which is at least 100 times greater than that of a rod (31).

8. Lightning protection device (10) according to one of Claims 1 to 7, in which the anti-corona element (20) is formed from an aluminium alloy.

9. Aircraft (50), **characterized in that** it comprises a lightning protection device (10) according to one of Claims 1 to 8.

10. Aircraft (50), **characterized in that** its structure incorporates a lightning protection device (10) according to Claim 1, so that the major axis of the ellipsoid formed by the dielectric shell (40) substantially coincides with the main direction in which the aircraft (50) moves.
